# EUROPÄISCHE PATENTANMELDUNG

(11) **EP 4 033 226 A1**
(43) Veröffentlichungstag der Anmeldung: **27.07.2022**
(21) Anmeldenummer: 22152411.9
(22) Anmeldetag: 20.01.2022
(51) Int. Cl.: G01N 21/88, G01N 21/95

(54) **VERFAHREN ZUR OPTISCHEN DETEKTION VON FEHLERN IN KERAMISCHEN ARTIKELN**

(30) Priorität: 20.01.2021 DE 102021101152
(71) Anmelder: Lippert GmbH & Co. KG, 92690 Pressath (DE)
(72) Erfinder: KLEVTSOV, Valery Alexeevich, 196602 Saint Petersburg (RU); GRADMANN, Michael, 92690 Pressath (DE)
(74) Vertreter: Louis Pöhlau Lohrentz

(57) **Zusammenfassung**

Vorgeschlagen wird ein Verfahren zur optischen Detektion von Fehlern in keramischen Artikeln (2), wobei eine Lichtquelle (3) den keramischen Artikel (2) beleuchtet, und wobei eine Kamera (4) als eine Zeilenkamera ausgebildet ist und zur Detektion von Fehlern im keramischen Artikel (2) bei einer Bildaufnahme eine Zeile des keramischen Artikels (2) aufnimmt, und wobei der keramische Artikel (2) auf einer Fördereinheit (5) derart transportiert wird, dass bei mehreren Bildaufnahmen die Kamera (4) mehrere Zeilen des keramischen Artikels (2) aufnimmt, und wobei die elektronische Steuereinrichtung (6) die Kamera (4) und/oder eine Lichtquelle (3) und/oder die Fördereinheit (5) steuert, und wobei eine Auswerteeinrichtung (7) die aufgenommenen Bilder auswertet, insbesondere die mehreren aufgenommenen Zeilen zu einem Bild zusammensetzt. Wesentlich dabei ist, dass die Lichtquelle (3) und die Kamera (4) an gegenüberliegenden Seiten des keramischen Artikels (2) angeordnet sind.

## Beschreibung

Die Erfindung betrifft ein Verfahren zur optischen Detektion von Fehlern in keramischen Artikeln, insbesondere keramischem Geschirr oder Porzellan, insbesondere von Fehlern im Randbereich des keramischen Artikels oder Porzellanartikels nach den Merkmalen des Oberbegriffs des Anspruchs 1.

Beim Herstellen keramischer Körper können unterschiedliche Fehler auftreten. Dabei kann es sich beispielsweise um Verfärbungen, Flecken, Glasurfehler, Risse, Beschädigungen, Anhaftungen oder Formabweichungen handeln. Die Fehler können ein völlig unterschiedliches Erscheinungsbild aufweisen. Manche Fehler sind gut sichtbar und manche der Fehler sind für ein ungeübtes Auge kaum zu erkennen. In der Praxis wird das Geschirr üblicherweise in verschiedene Qualitätsstufen eingeteilt. Diese sogenannte Sortierung erfolgt dabei in unterschiedliche Kategorien. Bei aktuellen Verfahren erfolgt eine Sichtprüfung per Hand aller Produkte und daraufhin eine Beurteilung durch eine prüfende Person. Eine derartige Prüfung durch eine Person unterliegt Schwankungen und auch Fehlern.

Aus der Praxis sind verschiedene Vorrichtungen zur automatischen optischen Inspektion aus anderen Technikgebieten bekannt.

Aus der EP 0 990 891 A1 ist ein Verfahren zur Überprüfung von transparenten Gummiteilen bekannt. Hier wird eine Lichtquelle verwendet, die das zu prüfende Teil von hinten durchleuchtet.

Die EP 1 790 975 A2 zeigt eine Vorrichtung zur Überprüfung von Schweißnähten. Es wird eine Zeilenkamera zur Bildaufnahme eingesetzt. Die zu prüfenden Schweißnähte werden durch ein Förderband hindurch von unten beleuchtet.

Üblicherweise ist bei maschineller optischer Inspektion eine möglichst gleichmäßige diffuse Beleuchtung vorgesehen. Die vorhandenen Fehler können bei unterschiedlichen Artikeln, beispielsweise bei unterschiedlicher Form und Farbe, nicht immer zuverlässig erkannt werden. In derartigen Systemen muss die Vorrichtung zudem für jede unterschiedliche Form eines Artikels die Fehler neu anhand zahlreicher Gutteile lernen.

Ein besonderes Problem stellt die Erkennung von Fehlern im Randbereich eines keramischen Körpers dar. Durch die dort vorhandenen stark gekrümmten und oft auch stark glänzenden Oberflächen sind diese nur sehr schwer mit einer Kamera maschinell zu prüfen.

Der vorliegenden Erfindung liegt die Aufgabe zugrunde, ein Verfahren und eine Vorrichtung bereitzustellen, welche eine schnellere, präzisere, zuverlässigere Fehlererkennung von keramischen Körpern oder Porzellangeschirr, vorzugsweise speziell im Randbereich der zu prüfenden Artikel, ermöglicht. Insbesondere soll das Prüfverfahren im laufenden Betrieb durchführbar sein, also bei einer industriellen Fertigung die Taktrate nicht verzögern.

Die Aufgabe wird erfindungsgemäß durch ein Verfahren zur optischen Detektion von Fehlern in keramischen Artikeln nach den Merkmalen des Anspruchs 1 gelöst.

Erfindungsgemäß wird ein Verfahren zur optischen Detektion von Fehlern in keramischen Artikeln, insbesondere keramischem Geschirr und/oder Porzellan, insbesondere von Fehlern im Randbereich des keramischen Artikels vorgeschlagen, umfassend die Bereitstellung einer Lichtquelle, einer Kamera, eines Förderbands zum Transport des zu prüfenden keramischen Artikels oder Porzellanteils, einer elektronischen Steuereinrichtung und einer Auswerteeinrichtung, wobei die Lichtquelle den keramischen Artikel beleuchtet, und wobei die Kamera als eine Zeilenkamera ausgebildet ist und zur Detektion von Fehlern im keramischen Artikel bei einer Bildaufnahme eine Zeile des keramischen Artikels aufnimmt, und wobei der keramische Artikel auf einer Fördereinheit derart transportiert wird, dass bei mehreren Bildaufnahmen die Kamera mehrere Zeilen des keramischen Artikels aufnimmt, und wobei die elektronische Steuereinrichtung die Kamera und/oder die Lichtquelle und/oder die Fördereinheit steuert, und wobei die Auswerteeinrichtung die aufgenommenen Bilder auswertet, insbesondere die mehreren aufgenommenen Zeilen zu einem Bild zusammensetzt. Wesentlich dabei ist, dass die Lichtquelle und die Kamera an gegenüberliegenden Seiten des keramischen Artikels angeordnet sind.

Der Vorteil einer Anordnung der Lichtquelle und der Kamera an gegenüberliegenden Seiten des keramischen Artikels liegt darin, dass nicht eine direkte Reflektion der Beleuchtung auf der Oberfläche des keramischen Artikels durch die Kamera detektiert wird, sondern es werden Abweichungen und/oder Änderungen der Beleuchtung durch Fehler im Randbereich detektiert. Speziell in den stark gebogenen Randbereichen des keramischen Artikels sind die direkt beleuchteten Bereiche und die scharfen Detektionsbereiche nur sehr klein. Durch eine Anordnung der Lichtquelle und der Kamera an gegenüberliegenden Seiten des keramischen Artikels können speziell an den stark gekrümmten Oberflächen am Rand des keramischen Artikels Fehler erkannt werden. Es hat sich überraschenderweise gezeigt, dass diese Detektion auch bei ansonsten wenig lichtdurchlässigen oder nicht lichtdurchlässigen keramischen Artikeln oder Porzellangeschirr möglich ist.

In einer Ausgestaltung kann vorgesehen sein, dass die Lichtquelle und die Kamera als separate Baueinheiten ausgebildet sind, insbesondere räumlich getrennt voneinander angeordnet sind.

Vorzugsweise kann die Kamera als CCD-Kamera mit zweidimensionalem Sensor ausgebildet sein.

In einer vorteilhaften Ausgestaltung kann die Kamera als Zeilenkamera mit einem Zeilensensor ausgebildet sein. Ein Vorteil einer Zeilenkamera ist die schnelle Auslesezeit und die höhere Pixelzahl der Zeile, verglichen mit Kameras mit zweidimensionalen Sensoren.

Die elektronische Steuereinrichtung und/oder Auswerteeinrichtung kann einen Computer oder ein Rechnersystem mit darauf installierter Software zur Bilderkennung bzw. Bildauswertung umfassen. Ferner kann die elektronische Steuereinrichtung und/oder Auswerteeinrichtung entsprechende Treiber zur Ansteuerung der Transporteinrichtung und/oder von Robotern für die Handhabung der zu prüfenden keramischen Artikeln oder Geschirrteile aufweisen.

Es kann vorgesehen sein, dass die elektronische Steuereinrichtung und/oder Auswerteeinrichtung selbstlernend ausgebildet ist. Das heißt, dass beim Einrichten der Maschine Fehlerteile und Gutteile aufgenommen werden, und die elektronische Steuereinrichtung anhand der sich von den Gutteilen unterscheidenden Aufnahmen der Fehlerteile selbsttätig eine Schwelle zur Erkennung von Fehlern einstellt. Sofern im laufenden Betrieb bei einer Aufnahme diese Fehlerschwelle erreicht wird, erkennt die Steuereinrichtung ein Fehlerteil und zeigt dieses an. Das fehlerhafte Teil kann dann anschließend von der Transporteinrichtung zu einem bestimmten Ort transportiert werden, beispielsweise aus dem Produktstrom ausgeschleust werden.

Alternativ zu der Aufnahme von Bildern können der Steuereinrichtung und/oder Auswerteeinrichtung entsprechende Bilder von Fehlerteilen und Gutteilen als Dateien eingespielt werden. Anhand dieser Dateien kann die elektronische Steuereinrichtung und/oder Auswerteeinrichtung eine Fehlerschwelle bestimmen und abspeichern.

Vorzugsweise kann die elektronische Steuereinrichtung und/oder Auswerteeinrichtung unterschiedliche Fehlerschwellen festlegen oder umfassen, wobei für ein bestimmtes Fehlerbild eine bestimmte Fehlerschwelle vorgesehen ist. Um während des Betriebes eine Optimierung zu ermöglichen kann vorgesehen sein, dass die elektronische Steuereinrichtung und/oder Auswerteeinrichtung die Fehlerschwelle verändert oder dass eine Bedienperson die Fehlerschwelle verändern kann. Dadurch kann die Rate von fälschlicherweise als fehlerhaft erkannter keramischer Artikel bzw. Geschirrteile reduziert werden.

Es ist vorzugsweise auch vorgesehen, dass die elektronische Steuereinrichtung und/oder Auswerteeinrichtung zum Erkennen mehrerer Qualitätsstufen ausgebildet sein kann. Beispielsweise kann die elektronische Steuereinrichtung mehrere Fehlerschwellen aufweisen, um die geprüften Teile in mehrere Qualitätsstufen, beispielsweise in drei oder vier oder fünf unterschiedliche Qualitätskategorien einzuteilen.

Insbesondere ermöglicht die elektronische Steuereinrichtung und/oder Auswerteeinrichtung durch die definierten Fehlerschwellen ein reproduzierbares Prüfresultat. Um eine Dokumentation des Prüfprozesses zu ermöglichen, kann die elektronische Steuereinrichtung einen Speicher aufweisen, in dem die zu einem fehlerhaften Teil gehörende Bildaufnahme gespeichert wird. Dadurch wird es ermöglicht den Prüfvorgang nachträglich auszuwerten. Durch nachträgliches Justieren der Fehlerschwelle kann die Qualität der Fehlererkennung weiter verbessert werden.

Es kann vorgesehen sein, dass die optische Achse der Lichtquelle und die optische Achse der Kamera parallel versetzt zueinander verschoben ausgebildet sind, oder die optischen Achsen unter einem Winkel zueinander ausgebildet sind, oder die optische Achse der Lichtquelle der optischen Achse der Kamera entspricht.

Insbesondere kann vorgesehen sein, dass die Lichtquelle als eine Punktquelle oder eine Linien-Lichtquelle ausgebildet ist. Für die Ausbildung einer Punktquelle oder Linienförmigen Lichtquelle kann ein Spiegel und/oder eine entsprechende Linse verwendet werden, die die Lichtstrahlen der Lichtquelle auf einen Punkt bzw. eine Linie projiziert. Ein Vorteil einer Linien-Lichtquelle ist, dass bei einer Anordnung der Kamera auf der Seite des Förderbands nur ein kleiner linienförmigen Bereich die Beleuchtung ermöglichen muss. Insbesondere kann die Lichtquelle als Linien-Lichtquelle ausgebildet sein und eine Mehrzahl von LEDs (Leuchtdioden) aufweisen, die in einer Linie nebeneinander angeordnet sind.

Insbesondere kann die Steuerungseinrichtung mit der Lichtquelle, oder mit den mehreren Zeilenmodulen der Lichtquelle und/oder mit der Vielzahl von LEDs der Lichtquelle verbunden sein, um diese zu steuern oder zu schalten. Die Steuerungseinrichtung kann die LEDs einzeln oder in Gruppen schalten und/oder die Zeilenmodule einzeln und/oder in Gruppen schalten, oder deren Lichtintensität steuern. Insbesondere ist die Steuerungseinrichtung zudem mit der Fördereinheit verbunden, um den zu prüfenden Körper synchron zu der Aufnahme zu transportieren.

Vorzugsweise kann eine Linienlichtquelle mit ihrer Längserstreckung quer, also rechtwinklig, zu der Förderrichtung der Fördereinheit angeordnet sein. Es ist auch denkbar, dass mehrere Linienlichtquellen vorgesehen sind, die in unterschiedlichen Winkeln relativ zu der Förderrichtung der Fördereinheit angeordnet sind.

Es kann vorgesehen sein, dass die Lichtquelle ein oder mehrere Strahlungsquellen aufweist. Vorzugsweise sind die mehreren Strahlungsquellen beabstandet voneinander angeordnet, um den keramischen Artikel von unten unter unterschiedlichen Winkeln zu beleuchten. Vorzugsweise sind die mehreren Strahlungsquellen einzeln ansteuerbar.

Es kann vorgesehen sein, dass die Lichtquelle das gesamte sichtbare Lichtspektrum aufweist, oder eine oder mehrere monochromatische Wellenlängen aufweist. Vorzugsweise kann die Lichtquelle schaltbar ausgebildet sein. Insbesondere kann die Intensität und/oder die Wellenlänge der Lichtquelle durch die elektronische Steuereinrichtung geschaltet werden.

Es kann vorgesehen sein, dass die Lichtquelle als eine diffuse und/oder telezentrische Beleuchtung ausgebildet ist. Es kann vorgesehen sein, dass die telezentrische Lichtquelle und/oder dass die diffuse Beleuchtung schaltbar ist bzw. sind. Insbesondere zeitlich versetzt einschaltbar bzw. ausschaltbar oder zeitlich synchron einschaltbar oder ausschaltbar.

Es kann vorgesehen sein, dass die mehreren Strahlungsquellen der Lichtquelle als reine diffuse Beleuchtung ausgebildet sind, oder als reine telezentrische Beleuchtung ausgebildet sind, oder als diffuse und telezentrische Beleuchtung ausgebildet sind.

Es kann vorgesehen sein, dass die mehreren Strahlungsquellen der telezentrischen Beleuchtung in zwei Reihen nebeneinander angeordnet sind, vorzugsweise entsprechend der linearen Detektion der Kamera. In einer Ausgestaltung kann vorgesehen sein, dass die Strahlungsquellen der Lichtquelle als Module ausgebildet sind, die beispielsweise an einem Rahmen austauschbar gehaltert sind. Dabei kann ein solches Lichtmodul zwei nebeneinander angeordnete Reihen oder Linien von Strahlungsquellen oder LEDs aufweisen. Es kann vorgesehen sein, dass die mehreren Strahlungsquellen der ersten Reihe räumlich versetzt und nebeneinander zu den mehreren Strahlungsquellen der zweiten Reihe ausgebildet sind. Vorzugsweise sind die erste Reihe und die zweite Reihe in einem Winkel zueinander gekippt derart angeordnet, dass sich das abgestrahlte Licht auf einer Linie schneidet, um trotz des räumlichen Versatzes nebeneinander den keramischen Artikel auf einer Linie zu beleuchten.

Es kann vorzugsweise auch vorgesehen sein, dass die Lichtquelle mehrere in Reihen oder Zeilen angeordnete Zeilenmodule umfasst. Jedes der Zeilenmodule kann dabei eine Vielzahl nebeneinander angeordneter LEDs aufweisen. Insbesondere beleuchtet ein solches Zeilenmodul den zu prüfenden Körper in einem vorbestimmten Winkel, der sich von dem Beleuchtungswinkel eines benachbarten Zeilenmoduls unterscheidet.

Vorzugsweise bedeutet hier telezentrisch, dass die Strahlen bei der Beleuchtung und/oder Detektion achsenparallel verlaufen. Der Vorteil einer telezentrischen Beleuchtung und/oder Detektion besteht darin, dass durch den gleichen Einfalls- und/oder Ausfallswinkel der Strahlen Fehler im keramischen Artikel an unterschiedlichen Stellen, beispielsweise an unterschiedlich geneigten Oberflächen, unter einem gleichen Winkel beleuchtet werden und von der Kamera unter gleichem Winkel aufgenommen werden. Daraus resultiert, dass von der Auswerteeinrichtung Fehler an verschiedenen Orten auf den keramischen Artikeln erkannt werden. Auch eine Zuordnung der Art des Fehlers ist dadurch einfacher möglich. Dadurch erkennt die Auswerteeinrichtung Fehler auch unter unterschiedlichen Neigungen oder Krümmungen des keramischen Artikels. Ein weiterer Vorteil einer telezentrischen Beleuchtung und/oder Detektion besteht darin, dass es keine perspektivische Verzerrung bei der Beleuchtung und der Detektion bei nicht flächigen keramischen Artikeln gibt.

Insbesondere bedeutet telezentrische Beleuchtung des keramischen Artikels, dass die Lichtquelle mittels eines telezentrischen Strahlengangs auf den keramischen Artikel abgebildet wird. Der keramische Artikel wird bei der telezentrischen Beleuchtung mit parallelen Strahlen beleuchtet, d.h. die Lichtstrahlen treffen im gleichen Einfallswinkel auf dem keramischen Artikel auf.

Insbesondere bedeutet telezentrische Detektion des keramischen Artikels, dass die Detektionsfläche der Kamera mittels eines telezentrischen Strahlengangs auf dem keramischen Artikel abgebildet wird, d.h. ein Teil des vom keramischen Artikel reflektierten Lichts über einen telezentrischen Strahlengang von der Kamera aufgenommen wird. Die Kamera nimmt den keramischen Artikel bei der telezentrischen Detektion unter parallelen Strahlen auf, d.h. die detektierten Lichtstrahlen strahlen im gleichen Ausfallswinkel von dem keramischen Artikel ab.

Ein Vorteil der telezentrischen Beleuchtung und/oder der telezentrischen Detektion ist, dass bei stark glänzenden Oberflächen und/oder bei stark gekrümmten Oberflächen eine gute optische Fehlerdetektion möglich ist.

Es kann vorgesehen sein, dass die optische Fehlererkennung im laufenden Betrieb, das heißt während der laufenden Fertigung von keramischen Artikeln bzw. Geschirrteilen oder Porzellanteilen durchgeführt wird. Die zu prüfenden keramischen Artikel bzw. Geschirrteile können manuell oder automatisch, beispielsweise durch einen Roboterarm, der Fördereinheit bzw. dem Förderband zugestellt werden. Die Fördereinheit bzw. das Förderband transportiert die zu prüfenden keramischen Artikel bzw. Geschirrteile an der Zeilenkamera vorbei, wobei diese, durch die Steuereinrichtung gesteuert, eine oder mehrere Bildaufnahmen eines zu prüfenden Teiles macht. Über die Auswerteeinrichtung werden die Bildaufnahmen ausgewertet und auf das Vorhandensein von Fehlern geprüft. Im Falle eines Fehlers steuert die Steuereinrichtung und/oder Auswerteeinrichtung beispielsweise eine visuelle Anzeige an, um den Fehler anzuzeigen. Es kann auch vorgesehen sein, dass die Steuereinrichtung und/oder Auswerteeinrichtung die Fördereinheit ansteuert, um das fehlerhafte Teil aus dem Produktstrom auszuschleusen. Vorzugsweise kann die Steuereinrichtung und/oder Auswerteeinrichtung einen nach (stromab) der Kamera angeordneten Roboterarm ansteuern, um ein fehlerhaftes Teil von der Fördereinheit zu entnehmen.

Es kann in einer Ausgestaltung vorgesehen sein, dass die Fördereinheit zwischen Kamera und Lichtquelle quer zum Erfassungsbereich der Kamera verlaufend angeordnet ist. Dadurch wird der zu prüfende keramische Artikel im Wesentlichen senkrecht zu dem Strahlengang der Kamera transportiert.

Es kann vorgesehen sein, dass die Fördereinheit als ein Förderband oder ein Verfahrtisch oder ein Riemenband, oder Transportarm, oder Transporteinrichtung ausgebildet ist.

Es kann vorgesehen sein, dass das Förderband den keramischen Artikel kontinuierlich oder schrittweise entlang einer Förderrichtung transportiert, insbesondere quer zu dem Strahlengang der Kamera transportiert.

Insbesondere ist vorgesehen, dass die Fördereinheit den zu prüfenden keramischen Artikel ohne Zwischenstopp und ohne die vorgegebene Transportgeschwindigkeit zu verlangsamen transportiert, so dass die Taktrate einer Fertigung von keramischen Artikeln durch das erfindungsgemäße Verfahren oder Vorrichtung nicht verlangsamt wird.

Es kann vorgesehen sein, dass der keramische Artikel vor der Messung von einem Förderband oder einem Verfahrtisch oder einem Riemenband durch einen Transportarm oder Roboterarm abgenommen wird und vorzugsweise nach der Messung auf das Förderband oder den Verfahrtisch oder dem Riemenband abgelegt wird.

Weiter kann vorgesehen sein, dass die Lichtquelle den keramischen Artikel von unten beleuchtet, und dass die Kamera den keramischen Artikel von oben aufnimmt, oder andersherum.

Es kann vorgesehen sein, dass die Lichtquelle als ein gerichteter Lichtstrahl oder ein paralleler Lichtstrahl oder ein fokussierter Lichtstrahl ausgebildet ist, der, sofern kein keramischer Artikel zwischen Lichtquelle und Kamera angeordnet ist an der Kamera, insbesondere dem Erfassungsbereich der Kamera, vorbei gerichtet ist. Der Vorteil eines kollimierten Strahlengangs liegt darin, dass optische Effekte, welche durch den Rand des keramischen Körpers erzeugt werden, besser ausgewertet werden können. Zudem können so Überstrahlungen durch einen direkt in den Erfassungsbereich der Kamera gerichteten Lichtstrahl vermieden werden.

Beispielsweise kann vorgesehen sein, dass durch Randeffekte und/oder Lichtleiteffekte des zu prüfenden keramischen Artikels zumindest ein Teil des Lichtstrahls der Lichtquelle in den Erfassungsbereich der Kamera geleitet und ausgewertet wird. Dazu kann vorgesehen sein, dass die Auswerteeinrichtung Lichtleiteffekte in dem keramischen Artikel erfasst, vorzugsweise Lichtleiteffekte am Randbereich des keramischen Artikels und/oder durch Fehler hervorgerufene Lichtleiteffekte im Randbereich des keramischen Artikels auswertet.

Es kann auch vorgesehen sein, dass die Auswerteeinrichtung Beugungseffekte und/oder Reflektionseffekte und/oder Brechungseffekte, vorzugsweise am Randbereich des keramischen Artikels und/oder durch Fehler im Randbereich des keramischen Artikels, auswertet.

In einer möglichen Ausgestaltung kann vorgesehen sein, dass die Fördereinheit mehrere hintereinander angeordnete, vorzugsweise parallele Transportbänder und/oder Transportriemen aufweist und der keramische Artikel durch einen Spalt zwischen zwei Transportbändern oder Transportriemen, und/oder einen transparenten Bereich in einem oder mehreren der Transportbänder, und/oder von unten beleuchtet wird. Bei der Nutzung einer Linienkamera oder eine Linien-Lichtquelle entspricht vorzugsweise der Spalt zwischen zwei Transportbändern oder Transportriemen mindestens der Breite der Linie der Beleuchtung oder der Detektion in diesem Bereich. Vorzugsweise ist die Breite derart ausgebildet, dass keine optischen Effekte durch das Förderband bei der Beleuchtung oder Detektion erzeugt werden.

Eine Anwendung des erfindungsgemäßen Verfahrens und der erfindungsgemäßen Vorrichtung kann in der Herstellung von Geschirr oder Porzellan oder Sanitärkeramik erfolgen, um die hergestellten Teile automatisch auf Fehler zu prüfen.

Weitere Ausführungen der Erfindung sind in den Figuren dargestellt und nachfolgend beschrieben. Dabei zeigen:
- Fig. 1:: Eine schematische Darstellung der Vorrichtung zur optischen Detektion;
- Fig. 2:: Eine schematische Darstellung einer Draufsicht einer Lichtquelle mit mehreren Strahlungsquellen räumlich versetzt zueinander;
- Fig. 3:: Eine schematische Darstellung einer Seitenansicht einer Lichtquelle mit mehreren Strahlungsquellen winklig zueinander angeordnet.

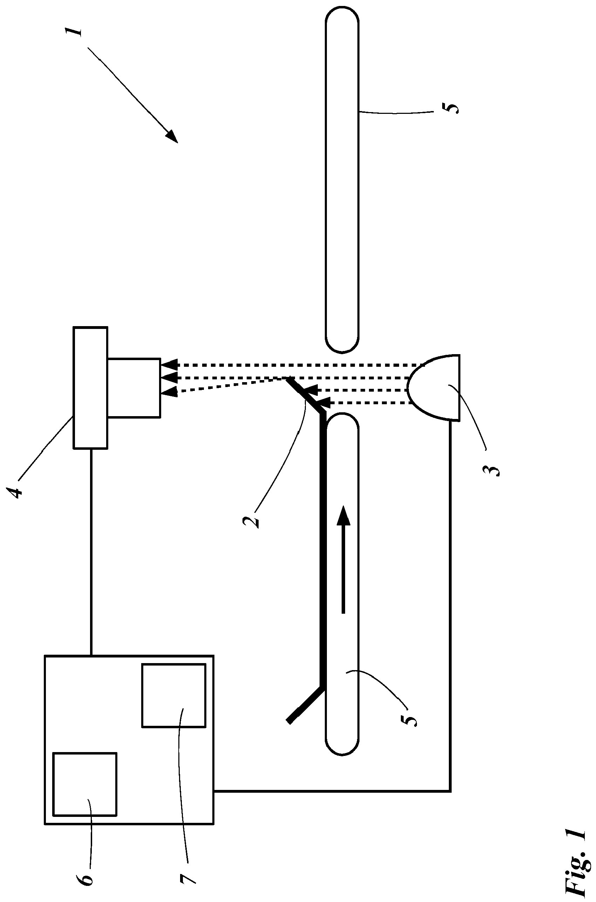

Fig. 1 zeigt die Vorrichtung 1 zur Durchführung des erfindungsgemäßen Verfahrens zur optischen Detektion von Fehlern in keramischen Artikeln 2, umfassend eine Lichtquelle 3, eine Kamera 4, einen keramischen Artikel 2, eine Fördereinheit 5, eine elektronische Steuereinrichtung 6 und eine Auswerteeinrichtung 7. Der keramische Artikel 2 wird auf der Fördereinheit 5 in Förderrichtung (Pfeil in Fig. 1) unter der Kamera 4 hindurchgeführt.

Im Ausführungsbeispiel der Fig. 1 setzt sich die Fördereinheit 5 aus zwei Förderbändern zusammen, welche mit Abstand zueinander angeordnet sind. Durch den Abstand der beiden Förderbänder ist ein Spalt ausgebildet, über den der keramische Artikel 2 geführt wird. Unterhalb des Spaltes der Fördereinheit 5 ist die Lichtquelle 3 angeordnet, welche den keramischen Artikel 2 von unten durch den Spalt hindurch beleuchtet. Durch diese Anordnung ist eine Detektion von gebeugter und/oder reflektierter und/oder gebrochener Strahlung von der Lichtquelle 3 in der Kamera 4 möglich.

Die Kamera 4 ist gegenüberliegend der Lichtquelle 3 angeordnet und detektiert die Strahlen der Lichtquelle 3. Wie im Ausführungsbeispiel der Fig. 1 dargestellt, wird die Strahlung der Lichtquelle 3 zum Teil am Randbereich des keramischen Artikels 2 gebeugt, wodurch Fehler speziell in diesem Randbereich detektiert werden können.

Die elektronische Steuereinrichtung 6 und die Auswerteeinrichtung 7 sind im Ausführungsbeispiel der Fig. 1 in einer gemeinsamen Anlage ausgebildet und sind sowohl mit der Lichtquelle 3 als auch der Kamera 4 verbunden, um beides zu steuern und um Bilder und Informationen aus der Kamera 4 auszulesen.

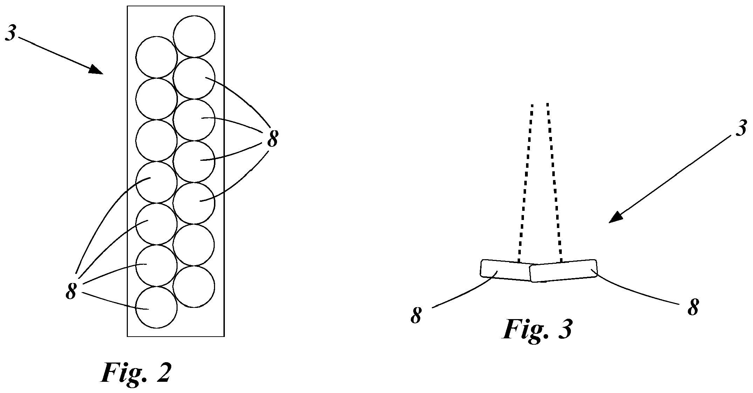

Fig. 2 und 3 zeigen ein Ausführungsbeispiel der Lichtquelle 3 mit mehreren Strahlungsquellen 9, beispielsweise mehrere Licht-emittierende-Halbleiter (LED). Ein derartiges Ausführungsbeispiel der Lichtquelle 3 kann in Verbindung mit einer Linienkamera genutzt werden, um den Aufnahmebereich der Linienkamera homogen zu beleuchten. Eine lineare Anordnung der mehreren Strahlungsquellen 9 ist bei einem Spalt zwischen den beiden Förderbändern aus Fig. 1 vorteilhaft.

Die mehreren Strahlungsquellen 9 sind, wie in Fig. 2 in einer Draufsicht gezeigt, in zwei Linien oder Reihen nebeneinander angeordnet, wobei die zwei Linien oder Reihen zueinander jeweils um den halben Durchmesser einer Strahlungsquelle 9 versetzt sind. Durch diese Anordnung wird eine Bestrahlung einer Linie des keramischen Körpers 2 mit gleichbleibender Intensität ermöglicht. Durch die Beleuchtung jeder Strahlungsquelle 9 aus der zweiten Reihe wird das jeweilige Beleuchtungsintensitätsminimum zwischen der Beleuchtung jeder Strahlungsquelle 9 der ersten Reihe ausgefüllt. Es kann vorgesehen sein, dass die Linien oder Reihen in einer Ebene angeordnet sind, oder wie in Fig. 2 gezeigt einen Winkel zueinander aufweisen.

Fig. 3 zeigt die Seitenansicht der Lichtquelle 3 aus Fig. 2. Die Strahlungsquellen 9 einer Linie sind dabei in einem kleinen Winkel zueinander angeordnet. Der Winkel ist so bemessen, dass die Strahlen in einer Linie nebeneinander auf dem keramischen Körper 2 auftreffen.

### Bezugszeichenliste

- 1: Vorrichtung zur optischen Detektion von Fehlern in keramischen Artikeln
- 2: keramischer Artikel
- 3: Lichtquelle
- 4: Kamera
- 5: Fördereinheit
- 6: Steuereinrichtung
- 7: Auswerteeinrichtung
- 8: Strahlungsquelle

## Patentansprüche

1. Verfahren zur optischen Detektion von Fehlern in keramischen Artikeln (2), insbesondere keramischem Geschirr und/oder Porzellan, insbesondere von Fehlern im Randbereich des keramischen Artikels (2),
umfassend die Bereitstellung einer Lichtquelle (3), einer Kamera (4), eines zu prüfenden keramischen Artikels (2), eines Förderbands zum Transport des keramischen Artikels (2) und/oder Porzellanteils, einer elektronischen Steuereinrichtung (6) und einer Auswerteeinrichtung (7),
wobei die Lichtquelle (3) den keramischen Artikel (2) beleuchtet, und wobei die Kamera (4) als eine Zeilenkamera ausgebildet ist und zur Detektion von Fehlern im keramischen Artikel (2) bei einer Bildaufnahme eine Zeile des keramischen Artikels (2) aufnimmt, und
wobei der keramische Artikel (2) auf einer Fördereinheit (5) derart transportiert wird, dass bei mehreren Bildaufnahmen die Kamera (4) mehrere Zeilen des keramischen Artikels (2) aufnimmt, und
wobei die elektronische Steuereinrichtung (6) die Kamera (4) und/oder die Lichtquelle (3) und/oder die Fördereinheit (5) steuert, und wobei die Auswerteeinrichtung (7) die aufgenommenen Bilder auswertet, insbesondere die mehreren aufgenommenen Zeilen zu einem Bild zusammensetzt, **dadurch gekennzeichnet,**
**dass** die Lichtquelle (3) und die Kamera (4) an gegenüberliegenden Seiten des keramischen Artikels (2) angeordnet sind.

2. Verfahren zur optischen Detektion von Fehlern in keramischen Artikeln (2) nach Anspruch 1,
**dadurch gekennzeichnet,**
**dass** die Fördereinheit (5) zwischen Kamera (4) und Lichtquelle (3) quer zum Erfassungsbereich der Kamera (4) verlaufend angeordnet ist.

3. Verfahren zur optischen Detektion von Fehlern in keramischen Artikeln (2) nach Anspruch 1 oder 2,
**dadurch gekennzeichnet,**
**dass** die Lichtquelle (3) den keramischen Artikel (2) von unten oder hinten beleuchtet, und
**dass** die Kamera (4) den keramischen Artikel (2) von oben oder vorne aufnimmt.

4. Verfahren zur optischen Detektion von Fehlern in keramischen Artikeln (2) nach einem der vorangehenden Ansprüche,
**dadurch gekennzeichnet,**
**dass** die Lichtquelle (3) als ein gerichteter Lichtstrahl oder ein paralleler Lichtstrahl oder ein fokussierter Lichtstrahl ausgebildet ist, der, sofern kein keramischer Artikel (2) zwischen Lichtquelle (3) und Kamera (4) angeordnet ist, an der Kamera (4), insbesondere dem Erfassungsbereich der Kamera (4), vorbei gerichtet ist.

5. Verfahren zur optischen Detektion von Fehlern in keramischen Artikeln (2) nach einem der vorangehenden Ansprüche,
**dadurch gekennzeichnet,**
**dass** die Lichtquelle (3) eine oder mehrere Strahlungsquellen aufweist, vorzugsweise sind die mehreren Strahlungsquellen beabstandet voneinander angeordnet, um den keramischen Artikel (2) von unten unter unterschiedlichen Winkeln zu beleuchten.

6. Verfahren zur optischen Detektion von Fehlern in keramischen Artikeln nach einem der vorangehenden Ansprüche,
**dadurch gekennzeichnet,**
**dass** die Lichtquelle (3) als eine diffuse und/oder telezentrische Beleuchtung ausgebildet ist, vorzugsweise, dass die telezentrische Lichtquelle (3) und/oder dass die diffuse Beleuchtung schaltbar ist bzw. sind.

7. Verfahren zur optischen Detektion von Fehlern in keramischen Artikeln (2) nach Anspruch 6,
**dadurch gekennzeichnet,**
**dass** die mehreren Strahlungsquellen der telezentrischen Beleuchtung in zwei Reihen nebeneinander angeordnet sind, vorzugsweise entsprechend der linearen Detektion der Kamera (4), vorzugsweise dass die mehreren Strahlungsquellen der ersten Reihe räumlich versetzt nebeneinander zu den mehreren Strahlungsquellen der zweiten Reihe ausgebildet sind, vorzugsweise sind die erste Reihe und die zweite Reihe in einem Winkel zueinander angeordnet, um trotz des räumlichen Versatzes nebeneinander den keramischen Artikel (2) auf einer Linie zu beleuchten.

8. Verfahren zur optischen Detektion von Fehlern in keramischen Artikeln (2) nach einem der vorangehenden Ansprüche,
**dadurch gekennzeichnet,**
**dass** durch Randeffekte und/oder Lichtleiteffekte des zu prüfenden keramischen Artikels (2) zumindest ein Teil des Lichtstrahls der Lichtquelle (3) in den Erfassungsbereich der Kamera (4) geleitet wird.

9. Verfahren zur optischen Detektion von Fehlern in keramischen Artikeln (2) nach einem der vorangehenden Ansprüche,
**dadurch gekennzeichnet,**
**dass** die Auswerteeinrichtung (7) Beugungseffekte und/oder Reflektionseffekte und/oder Brechungseffekte, vorzugsweise am Randbereich des keramischen Artikels (2) und/oder durch Fehler im Randbereich des keramischen Artikels (2), auswertet.

10. Verfahren zur optischen Detektion von Fehlern in keramischen Artikeln (2) nach einem der vorangehenden Ansprüche,
**dadurch gekennzeichnet,**
**dass** die Auswerteeinrichtung (7) Lichtleiteffekte in dem keramischen Artikel (2) erfasst, vorzugsweise Lichtleiteffekte am Randbereich des keramischen Artikels (2) und/oder durch Fehler hervorgerufene Lichtleiteffekte im Randbereich des keramischen Artikels (2) auswertet.

11. Verfahren zur optischen Detektion von Fehlern in keramischen Artikeln (2) nach einem der vorangehenden Ansprüche,
**dadurch gekennzeichnet,**
**dass** die Fördereinheit (5) mehrere hintereinander angeordnete Transportbänder und/oder Transportriemen und/oder Transportketten aufweist und der zu prüfende keramische Artikel (2) durch
- einen Spalt zwischen zwei Transportbändern oder Transportriemen oder Transportketten, und/oder
- einen transparenten Bereich in einem oder mehreren der Transportbänder, und/oder
- von unten beleuchtet wird.
